(19) Europäisches Patentamt
European Patent Office
Office européen des brevets

(11) **EP 2 692 816 A1**

(12) **EUROPÄISCHE PATENTANMELDUNG**

(43) Veröffentlichungstag:
**05.02.2014 Patentblatt 2014/06**

(51) Int Cl.:
*C09K 3/14* (2006.01)     *B24D 3/14* (2006.01)
*C04B 35/111* (2006.01)

(21) Anmeldenummer: **12178933.3**

(22) Anmeldetag: **02.08.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **ROBERT BOSCH GMBH**
**70442 Stuttgart (DE)**

(72) Erfinder:
• **Hejtmann, Georg**
**74395 Mundelsheim (DE)**

• **Lindemann, Gert**
**72805 Lichtenstein (DE)**
• **Pleschinger, Tony**
**70439 Stuttgart (DE)**
• **Stedile, Petra**
**73732 Esslingen (DE)**
• **Fuenfschilling, Stefan**
**78337 Öhningen (DE)**
• **Jenni, Adrian**
**9000 St. Gallen (CH)**

(54) **Schleifkorn mit einander durchdringenden flächigen Körpern**

(57)     Die Erfindung betrifft einerseits ein Schleifkorn (10), welches mindestens zwei, bevorzugt mindestens drei im Wesentlichen flächige Körper (11-1, 11-2) enthält. dadurch gekennzeichnet, dass mindestens zwei der flächigen Körper (11-1, 11-2) einander zumindest teilweise durchdringen. Das Schleifkorn (10) kann ein keramisches Material enthalten, insbesondere polykristallines $\alpha$-Al$_2$O$_3$. Zudem sind Gesamtheiten von Schleifkörnern (10), Verfahren zum Herstellen von Schleifkörnern (10), Giesswerkzeuge, Schleifartikel, Verfahren zum Herstellen von Schleifartikeln und Verfahren zum Schleifen einer Oberfläche offenbart.

Fig. 1a

EP 2 692 816 A1

**Beschreibung**

Die vorliegende Erfindung betrifft Schleifkörner mit definierter Form, Gesamtheiten von Schleifkörnern, Verfahren zum Herstellen von Schleifkörnern, Giesswerkzeuge, Schleifartikel mit Schleifkörnern, Verfahren zum Herstellen von Schleifartikeln sowie Verfahren zum Schleifen einer Oberfläche mit einem Schleifartikel.

Schleifkörner, insbesondere keramische Schleifkörner, mit definierter Form und Grösse sind seit einiger Zeit bekannt.

Die US 5,201,916 offenbart unter anderem flache Schleifkörner mit beispielsweise dreieckiger, rechteckiger oder kreisförmiger Form. Diese Schleifkörner werden aus einer Dispersion hergestellt, die in $\alpha$-Aluminiumoxid konvertierbare Partikel und eine Flüssigkeit mit einer flüchtigen Komponente enthält. Die Dispersion wird in eine Giessform gegossen, die eine ebene Grundfläche und Vertiefungen aufweist, deren Formen komplementär zur gewünschten Formen der Schleifkörner sind. Anschliessend wird ein Teil der flüchtigen Komponente entfernt, so dass ein Vorprodukt mit der gewünschten Form entsteht. Das Vorprodukt wird dann aus der Giessform entnommen, kalziniert und schliesslich gesintert, so dass das fertige Schleifkorn entsteht.

Die mit diesem Verfahren hergestellten Schleifkörner weisen zwei gegenüberliegende Grundflächen auf, die im Wesentlichen die gleiche geometrische Form haben. Den Schleifkörnern wird eine längere Lebensdauer zugewiesen, da von den Schleifkörnern während des Schleifens ständig kleine Stücke abbrechen, so dass sich neue Schneideflächen ergeben. Die Schleifkörner schärfen sich hierdurch selbst. Von Schleifkörnern mit einer Grundfläche in Form eines Dreiecks, insbesondere eines gleichseitigen Dreiecks, wird vermutet, dass sich beim elektrostatischen Streuen etwa ein bis zwei Drittel so orientieren, dass eine Spitze von der Unterlagen weg weist, während sich weitere Schleifkörner so orientieren, dass die Spitze auf die Unterlage zu weist.

In einem in EP 615 816 beschriebenen alternativen Verfahren werden mittels Extrusion zunächst längliche, stangenförmige Vorprodukte erzeugt, die anschliessend in einzelne Schleifkörner zerteilt werden. Die stangenförmigen Schleifkörner können somit beispielsweise eine Zylinder- oder Prismenform aufweisen.

In der WO 2009/085841 wird ein weiteres Herstellungsverfahren beschrieben, bei dem das Vorprodukt in der Giessform unter Bedingungen getrocknet wird, die zum Brechen des Vorprodukts führen. Die Bruchstücke weisen zumindest teilweise Oberflächen und Kanten auf, die komplementär zu den entsprechenden Oberflächen und Kanten der Giessform sind und daher den durch die Giessform definierten Winkel aufweisen. Diese Oberflächen und Kanten liefern eine erhöhte Schneidfähigkeit. Die weiteren, durch das Brechen entstandenen Oberflächen und Kanten sind hingegen unregelmässig.

Die WO 2010/077495 offenbart Schleifkörner, die eine durchgehende oder eine nicht durchgehende Öffnung enthalten oder eine schalenartige Form aufweisen. Auch Herstellungsverfahren für derartige Schleifkörner sind dort beschrieben. Weitere Schleifkörner mit undefinierten Öffnungen sind in der WO 2010/077518 offenbart. Die WO 2010/077491 befasst sich ebenfalls mit Schleifkörnern mit einer schalenartigen Form.

Aus der WO 2010/077519 sind Schleifkörner bekannt, die zwei gegenüberliegende Hauptflächen und dazwischen verlaufende, zu den Hauptflächen geneigte Seitenflächen aufweisen. Die verschiedenen Seitenflächen eines Schleifkorns können unter verschiedenen Winkeln relativ zu den Hauptflächen geneigt sein.

Das Dokument WO 2011/068724 zeigt ebenfalls Schleifkörner, welche eine Grundseite und eine Spitze sowie dazwischen verlaufende geneigte Seitenflächen aufweisen. Ähnliche Schleifkornformen sind auch in der WO 2011/109188 beschrieben.

Das Dokument WO 2010/077509 befasst sich mit Schleifkörnern, die eine Oberfläche mit einer Vielzahl von Furchen aufweisen. Diese Furchen werden mit Hilfe von komplementären Graten an der Unterseite der Giessform erzeugt.

Die WO 2011/068714 zeigt pyramidenförmige Schleifkörner mit einer parallelogrammförmigen, insbesondere rhombischen, einer drachenförmigen und einer superelliptischen Grundfläche.

Die WO 2011/139562 offenbart Schleifkörner in Form von Tetraedern und Abwandlungen davon. Beispielsweise können die Seitenflächen konkav oder konvex ausgebildet sein, die Ecken des Tetraeders können abgestumpft sein, oder die Kanten können kurvenförmig sein.

Die in WO 2012/018903 beschriebenen Schleifkörner enthalten zwei oder mehr plattenförmige Abschnitte, welche unter einem Winkel zueinander angeordnet sind.

Bei dem in WO 2012/061016 beschriebenen Verfahren wird zunächst ein abrasives Gebilde hergestellt, welches Schleifkornvorprodukte enthält, die über zerbrechliche Stege miteinander verbunden sind. Nach dem Sintern werden die Schleifkörner voneinander getrennt, indem die Stege durchbrochen werden.

Alternativ können Schleifkörner definierter Form auch mit einem Siebdruckverfahren hergestellt werden. Dies beschreibt beispielsweise die WO 96/12776. Dabei wird eine dimensionsstabile Dispersion durch Öffnungen mit definierter Form auf ein Transportband geleitet und anschliessend gehärtet. Die Öffnungen können beispielsweise in einem beweglichen Endlosband enthalten sein.

Eine Weiterentwicklung des Siebdruckverfahrens ist in der WO 2011/087649 offenbart. Bei diesem Verfahren wird die Dispersion mit Hilfe eines Differenzdrucks durch die Öffnungen des Endlosbandes hindurchgedrückt. Bei geeigneter Wahl der Viskosität der Dispersion können mit diesem Verfahren Schleifkörner hergestellt werden, deren Querschnitt sich von einer ersten Hauptseite zu einer zweiten gegenüberliegenden Hauptseite verjüngt.

In der WO 2012/061033 werden Verfahren zum Herstellen von Schleifkörnern definierter Form mit Hilfe von Laserstrahlung beschrieben. Zudem sind weitere spezielle Formen von Schleifkörnern offenbart. Beispielsweise können die Schleifkörner ein Hauptelement und mindestens drei sich davon erstreckende, stangenförmige Elemente enthalten. Insbesondere kann das Schleifkorn die Form eines Kreuzes, eines Grossbuchstaben "T", eines Sternes oder eines griechischen Kleinbuchstaben "λ" haben.

Allgemein wird davon ausgegangen, dass Schleifkörner mit definierter Form in mehrerlei Hinsicht verbesserte Eigenschaften aufweisen: Haben die Schleifkörner bereits zum Beginn ihrer Herstellung eine definierte Form und Grösse, so entfällt ein anschliessender Sortierschritt, mit dem die Schleifkörner ansonsten in verschiedene Grössenfraktionen aufgeteilt werden müssten. Zudem bleiben die Formen und Grössen auch zwischen verschiedenen Produktionschargen nahezu unverändert, was die Schleifeigenschaften sehr gut reproduzierbar macht. Des Weiteren können die Schleifkörner beispielsweise einen erhöhten Gesamtabtrag leisten, eine längere Lebensdauer haben, eine gesteigerte Oberflächengüte der bearbeiteten Oberfläche erzeugen oder ein besser reproduzierbares Schleifergebnis liefern.

Dennoch weisen die aus dem Stand der Technik bekannten Schleifkörner eine Reihe von Nachteilen auf. Beispielsweise müssen die aus der US 5,201,916 bekannten plättchenförmigen Schleifkörner mit Hilfe eines elektrostatischen Feldes ausgerichtet werden, damit sie die volle Schleifwirkung erbringen können. Eine elektrostatische Streuung ist auch für die in WO 2012/018903 offenbarten Schleifkörner erforderlich, die eine Bodenplatte und eine in einem Winkel dazu angeordnete weitere Platte aufweisen. Die eigentlich gewünschte Schleifwirkung wird nur durch diejenigen Schleifkörner erreicht, deren Bodenplatte auf der Schleifmittel-Unterlage aufliegt. Eine solche Orientierung kann jedoch durch eine mechanische Streuung nicht zuverlässig gewährleistet werden. Selbst wenn eine nur teilweise Orientierung der Schleifkörner toleriert würde, so wären der Anteil der orientierten Schleifkörner und daher auch die Schleifwirkung kaum kontrollierbar.

Es ist daher eine Aufgabe der vorliegenden Erfindung, die Nachteile des Standes der Technik zumindest teilweise zu beheben. Insbesondere soll also ein Schleifkorn bereitgestellt werden, dessen Schleifwirkung möglichst unabhängig von seiner Orientierung auf einer Schleifmittel-Unterlage ist. Zudem sollte das Schleifkorn bevorzugt auch mittels einer mechanischen Streuung mit möglichst grosser Wahrscheinlichkeit in gewünschter Weise auf einer Schleifmittel-Unterlage orientiert werden können. Insbesondere soll mit möglichst grosser Wahrscheinlichkeit mindestens eine Kante und/oder mindestens eine Ecke des Schleifkorns von der Unterlage weg und damit auf eine zu bearbeitende Oberfläche hin weisen.

Diese Aufgabe wird gelöst durch ein Schleifkorn welches mindestens zwei, bevorzugt mindestens drei im Wesentlichen flächige Körper aufweist. In vielen Ausführungsformen weist das Schleifkorn genau zwei oder genau drei im Wesentlichen flächige Körper auf. Erfindungsgemäss durchdringen mindestens zwei der flächigen Körper einander zumindest teilweise.

Bei den flächigen Körpern handelt es sich um gedachte Körper, aus denen das gesamte Schleifkorn nur gedanklich zusammengesetzt ist. Dass das Schleifkorn mindestens zwei oder mehr Körper enthält, ist also nicht dahingehend zu verstehen, dass das Schleifkorn aus zwei oder mehr zunächst separat hergestellten Körpern zusammengefügt wurde oder ist. Stattdessen sind die erfindungsgemässen Schleifkörner einstückig ausgebildet und hergestellt.

Ein Körper wird hier und im Folgenden als flächig verstanden, wenn er in einer ersten Richtung eine Ausdehnung aufweist, die geringer ist als die Ausdehnungen in einer zu dieser ersten Richtung senkrechten Fläche. Die Ausdehnung in der ersten Richtung wird als Dicke des Körpers bezeichnet. Die dazu senkrechte Fläche kann eben oder auch gewölbt sein. Im Falle einer Wölbung kann die Dicke an verschiedenen Punkten des Körpers in zueinander nicht parallelen Richtungen verlaufen.

Senkrecht zu seiner Dicke kann der Körper von zwei gegenüberliegenden Hauptoberflächen begrenzt sein. Diese Hauptoberflächen können eben sein. Sie können im Wesentlichen parallelogrammförmig, insbesondere im Wesentlichen rechteckig, insbesondere im Wesentlichen quadratisch ausgebildet sein. In besonders bevorzugten Ausführungsformen kann der Körper im Wesentlichen quaderförmig sein. Es sind jedoch auch andere Formen der Hauptoberflächen denkbar, wie beispielsweise andere Polygone oder Formen, deren Aussenkontur ausser geradlinigen Abschnitten konkav gekrümmte und/oder konvex gekrümmte Abschnitte aufweist. In vielen Fällen schaffen Ecken in der Aussenkontur der Hauptoberflächen Schnittkanten, welche die Schneidwirkung des Schleifkorns positiv beeinflussen. Alternativ können die Hauptoberflächen aber auch gewölbt sein.

Im Rahmen der vorliegenden Erfindung durchdringen ein erster flächiger Körper und ein zweiter flächiger Körper einander zumindest teilweise, wenn der Schnittbereich der beiden Körper jeden der beiden Körper zumindest teilweise in jeweils mindestens zwei Teilkörper teilt. Auch diese Teilung ist hierbei nur als gedankliche Teilung zu verstehen.

Im Gegensatz dazu durchdringen die Platten der in WO 2012/018903 offenbarten Schleifkörner einander nicht; stattdessen verläuft dort der Schnittbereich der beiden Platten nur in einem Randbereich der Bodenplatte, so dass die Bodenplatte nicht in zwei Teilkörper geteilt wird. Ein Schleifkorn mit einer erfindungsgemässen Durchdringung verhindert es, dass das Schleifkorn auf einer der Hauptoberflächen der Körper aufliegen kann. Stattdessen können die Schleifkörner so auf einer Unterlage platziert werden, dass Randbereiche der Körper auf der Unterlage aufliegen. Hierdurch kann auch durch eine mechanische Streuung eine gleichmässige Orientierung erreicht werden. Eine Schneidwirkung entsteht dadurch, dass von der Unterlage weg weisende Randbereiche der Körper und insbesondere dort vorliegende Kanten und/oder Ecken auf eine zu bearbeitende Oberfläche hin weisen.

Die Hauptoberflächen eines Körpers haben einen Flächendurchmesser. Dieser wird verstanden als der kleinste Durchmesser eines Kreises, welcher die Hauptoberfläche enthält; er kann somit als Durchmesser eines Hüllkreises der Hauptoberfläche aufgefasst werden. Im Falle einer quadratischen Hauptoberfläche mit Seitenlänge a ist der Durchmesser $\sqrt{2}\,a$. Mit besonderem Vorteil beträgt das Verhältnis des Flächendurchmessers und der Dicke des Körpers mindestens 2, bevorzugt mindestens 3, weiter bevorzugt mindestens 4, besonders bevorzugt mindestens 5.

Ausser den Hauptoberflächen können die einzelnen Körper auch Seitenflächen aufweisen, die die Körper jeweils seitlich begrenzen. Diese Seitenflächen können eben, konkav gewölbt oder konvex gewölbt sein. Sie können auch mehrere Abschnitte enthalten, wobei die einzelnen Abschnitte eben oder konkav gewölbt oder konvex gewölbt sein können. Die Seitenflächen können unter einem rechten Winkel oder geneigt zu den Hauptoberflächen verlaufen.

Die Hauptoberflächen und/oder die Seitenflächen können mindestens eine Öffnung aufweisen, die als Sackloch oder als durchgehende Öffnung ausgebildet sein kann. Derartige Öffnungen schaffen weitere Kanten, die eine zusätzliche Schneidwirkung erzeugen können, oder sie können als Flüssigkeitsreservoir oder zur Aufnahme von Schmiermittel dienen.

In einigen Ausführungsformen kann ein erster flächiger Körper einen zweiten flächigen Körper vollständig durchdringen. Dies bedeutet, dass der Schnittbereich des ersten und des zweiten Körper den zweiten Körper vollständig in zumindest zwei Teilkörper teilt. Der Schnittbereich erstreckt sich dann von einem ersten Randbereich des zweiten Körpers bis zu einem zweiten, gegenüberliegenden Randbereich des zweiten Körpers. Besonders bevorzugt verläuft der Schnittbereich durch den Mittelpunkt des zweiten Körpers und teilt den zweiten Körper insbesondere in zwei etwa gleich grosse Teilkörper.

Mindestens zwei einander durchdringende flächige Körper können einander in einem Winkel schneiden, der insbesondere mindestens 30°, bevorzugt mindestens 60°, weiter bevorzugt mindestens 75° und besonders bevorzugt 90° beträgt. Dieser Winkel wird als der Winkel zwischen den jeweiligen Dickenausdehnungen der beiden Körper im Bereich des Schnittbereichs angesehen. Alternativ kann er auch als der Winkel zwischen den Flächen der beiden Körper verstanden werden, entlang denen sich diese Körper erstrecken.

Wenn das Schleifkorn genau zwei flächige Körper enthält, so kann es in Form eines Prismas ausgebildet sein. Jede der beiden Basisflächen des Prismas wird dann von jeweils einer Seitenfläche eines der flächigen Körper gebildet und hat die Form eines Kreuzes.

Ein Prisma hat eine Basisfläche und eine dazu senkrechte gemessene Höhe. Der Basisfläche kann ein Flächendurchmesser zugeordnet werden, welcher als der kleinste Durchmesser eines Kreises verstanden wird, der die Basisfläche enthält; er kann somit als Durchmesser eines Hüllkreises der Basisfläche aufgefasst werden. Vorteilhafterweise ist das Verhältnis aus der Höhe des Prismas und dem Flächendurchmesser des Prismas mindestens 0,5, bevorzugt mindestens 0,75 und besonders bevorzugt mindestens 1. Je grösser das Verhältnis aus der Höhe des Prismas und dem Flächendurchmesser des Prismas ist, desto geringer ist bei einer mechanischen Streuung die Gefahr, dass das Schleifkorn mit einer der Basisflächen auf einer Unterlage zu liegen kommt.

Das Schleifkorn kann mindestens drei, bevorzugt genau drei flächige Körper aufweisen, welche einander in mindestens einem gemeinsamen Schnittbereich schneiden. Dabei ist es vorteilhaft, wenn drei flächige Körper einander paarweise in einem Winkel schneiden, der insbesondere jeweils mindestens 30°, bevorzugt mindestens 60°, weiter bevorzugt mindestens 75° und besonders bevorzugt 90° beträgt. Besonders bevorzugt schneiden die drei flächigen Körper einander paarweise jeweils in einem Winkel von 90°. Insbesondere können dann sämtliche Stirnflächen des Schleifkorns die Form eines Kreuzes haben. Eine derartige Geometrie weist eine besonders hohe Symmetrie auf und sorgt dafür, dass Schleifkörner dieser Form auch mittels mechanischer Streuung mit sehr einheitlicher Orientierung auf einer Schleifmittel-Unterlage platziert werden können.

Es ist ebenfalls bevorzugt, wenn mindestens drei, bevorzugt genau drei flächige Körper einander in einem gemeinsamen Schnittbereich schneiden, der sich von einem ersten Randbereich eines jeden Körpers zu einem zweiten, gegenüberliegenden Randbereich dieses Körpers erstreckt. Er kann sich auch vollständig im Inneren der Hauptoberflächen eines jeden Körpers befinden.

Die Form und die Grösse des Schleifkorns können etwa mit Hilfe eines Mikroskops bestimmt werden. Das erfindungsgemässe Schleifkorn kann eine Grösse im gesamten Grössenbereich aufweisen, der auch für herkömmliche Schleifkörner üblich ist. Als Grösse des Schleifkorns wird hierbei der grösste der oben genannten Flächendurchmesser der einzelnen flächigen Körper angesehen. Üblicherweise führen Schleifkörner mit grösseren Grössen zu einem höheren Materialabtrag von einer bearbeiteten Oberfläche als kleinere Schleifkörner. Beispielsweise kann das Schleifkorn eine Grösse im Bereich von 100 μm bis 2000 μm haben.

Bei der oben beschriebenen Form des Schleifkorns handelt es sich um eine Idealisierung. Die Erfindung umfasst jedoch auch Schleifkörner, welche im Rahmen der Herstellungstoleranzen von dieser idealisierten Form abweichen. Mögliche Abweichungen von der idealisierten Form können eine oder mehrere der folgenden Ursachen haben:

- Hohlräume oder Bläschen aufgrund eingeschlossener Luft und/oder anderer Gase in einer Dispersion, aus der die Schleifkörner hergestellt werden;

- fehlende Ecken und/oder Kanten, welche durch ein nicht komplettes Ausfüllen einer Giessform und/oder während eines Entfernens eines Vorprodukts des Schleifkorns aus einer Giessform entstehen;

- eingefallene Seitenflächen und/oder Kanten, die durch ein Schrumpfen während des Entfernens eines Teiles der flüchtigen Komponenten der Dispersion entstehen; insbesondere eingefallene Flächen, die aus der oberen freien, nicht in Kontakt mit der Giessform stehenden Fläche der Dispersion entstehen;

- Abplatzungen, welche durch einen Trocken- und/oder einen Sinterprozess hervorgerufen werden;

- abgebrochene Ecken und/oder Kanten, welche durch einen Transport und/oder während einer Weiterverarbeitung der Schleifkörner als Schüttgut entstehen.

Die Abweichungen von der Idealisierung müssen nicht zwangsläufig zu nachteiligen Eigenschaften des Schleifkorns führen. Beispielsweise können abgebrochene Ecke und/oder Kanten auch bewirken, dass gegenüber der Idealisierung weitere Schneidkanten entstehen, die die Schleifwirkung sogar positiv beeinflussen können.

Insbesondere umfasst die Erfindung auch Schleifkörner, deren Form nur im Wesentlichen mit der idealisierten Form übereinstimmt. Beispielsweise wird ein flächiger Körper als im Wesentlichen eben angesehen, wenn seine Hauptoberflächen gewölbt sind und Krümmungsradien aufweisen, die mindestens das Doppelte, bevorzugt mindestens das Fünffache, besonders bevorzugt mindestens das Zehnfache der Grösse des Schleifkorns betragen. Zudem wird eine Hauptoberfläche auch dann als im Wesentlichen parallelogrammförmig angesehen, wenn sie unter einem Winkel zueinander angeordnet sind, der höchstens 10°, bevorzugt höchstens 5°, besonders bevorzugt höchstens 2° ist. Des Weiteren wird eine Hauptoberfläche auch dann als im Wesentlichen quadratisch angesehen, wenn die Eckwinkel von einem rechten Winkel um höchstens 10°, bevorzugt höchstens 5°, besonders bevorzugt höchstens 2° abweichen.

Bevorzugt weist das Schleifkorn aber eine wie oben beschriebene idealisierte Form auf.

Das Schleifkorn kann beispielsweise ein keramisches Material, insbesondere ein polykristallines keramisches Material, enthalten oder daraus bestehen. Bevorzugt enthält das Schleifkorn Aluminiumoxid, besonders bevorzugt $\alpha$-$Al_2O_3$.

Alternativ oder zusätzlich kann das Schleifkorn auch noch mindestens ein weiteres Metalloxid enthalten, wie etwa Natriumoxid, Magnesiumoxid, Eisenoxid, Siliziumoxid, Kalziumoxid, Zirkonoxid, Yttriumoxid, Zinkoxid, Kobaltoxid, Nickeloxid, Hafniumoxid, Chromoxid, Praseodymoxid, Samariumoxid, Ytterbiumoxid, Neodymoxid, Lanthanoxid, Gadoliniumoxid, Ceroxid, Dysprosiumoxid, Erbiumoxid, Lutetiumoxid, Titanoxid, Manganoxid oder beliebige Kombinationen davon.

Viele dieser Metalloxide stammen von Verunreinigungen in den Ausgangsrohstoffen, wie beispielsweise in Aluminiumoxid. Bei ausreichend geringen Anteilen im Schleifkorn haben solche Verunreinigungen jedoch keinen negativen Einfluss auf die Herstellung und die Anwendung des Schleifkorns. Einige der genannten Verunreinigungen können sogar einen positiven Effekt auf das Schleifkorn haben.

Anteile von Zirkonoxid oder Yttriumoxid können beispielsweise von Mahlkugeln stammen, die in einem Mahlschritt bei der Herstellung der Schleifkörner verwendet werden können. Anteile von Eisenoxid können aus einem Mahlbehälter stammen, der bei einem solchen Mahlschritt verwendet wird.

Ebenfalls alternativ oder zusätzlich kann das Schleifkorn weitere Hartstoffe enthalten, wie beispielsweise Siliziumkarbid.

Weiterhin kann das Schleifkorn mindestens ein Zersetzungsprodukt eines unten näher beschriebenen Dispergators enthalten, der bei der Herstellung der Schleifkörner verwendet wurde. Ferner kann das Schleifkorn mindestens einen Keimbildner oder dessen Zersetzungsprodukt enthalten, welches bei der Herstellung der Schleifkörner verwendet wurde. Bei dem Keimbildner kann es sich beispielsweise um das oben bereits erwähnte Magnesiumoxid handeln.

Zudem kann das Schleifkorn auch mindestens einen der weiteren in der EP 615 816 A1 beschriebenen Stoffe enthalten.

Die genannten Inhaltsstoffe können mit Hilfe von an sich bekannten chemischen Analyseverfahren bestimmt werden.

Das Schleifkorn kann ein Gefüge mit einer oder mehreren verschiedenen Phasen enthalten oder daraus bestehen. Dabei kann eine erste Phase aus Aluminiumoxid, besonders bevorzugt aus $\alpha$-$Al_2O_3$ bestehen. Eine zweite Phase kann aus einem oder mehreren der oben genannten weiteren Metalloxide und/oder weiteren Hartstoffe bestehen.

Der Anteil an Aluminiumoxid, insbesondere an $\alpha$-$Al_2O_3$, im Schleifkorn kann beispielsweise mindestens 25 Gew.-%, bevorzugt mindestens 50 Gew.-%, weiter bevorzugt mindestens 70 Gew.-%, besonders bevorzugt mindestens 95 Gew.-% betragen.

Das Schleifkorn kann eine Beschichtung aufweisen, welche nur einen Teil der Oberfläche bedeckt, insbesondere nur eine oder mehrere Kanten und/oder nur einen von mehreren flächigen Bereichen der Oberfläche. Bei der Beschichtung kann es sich etwa um eine ferromagnetische oder eine paramagnetische Beschichtung handeln. Eine solche teilweise Beschichtung der Oberfläche mit einem ferromagnetischen oder einem paramagnetischen Material ermöglicht es, das Schleifkorn in einem während des Streuens angelegten Magnetfeld in einer vorgegebenen Richtung auszurichten. Alternativ kann es sich auch um eine Beschichtung aus einem Material mit einer erhöhten Wärmeleitfähigkeit handeln oder um eine Beschichtung, welche eine Adhäsion des Schleifkorns auf der Schleifmittel-Unterlage ermöglicht.

Ein weiterer Aspekt der Erfindung betrifft eine Gesamtheit von Schleifkörnern. Unter einer Gesamtheit von Schleifkörnern wird hier und im Folgenden eine zusammengehörige Ansammlung von Schleifkörnern verstanden. Beispielsweise kann es sich dabei um eine Ansammlung von Schleifkörnern handeln, die in einem Gebinde enthalten und so gelagert und/oder transportiert werden, beispielsweise in einem Sack.

Eine solche Ansammlung von Schleifkörner kann zur Herstellung eines Schleifartikels verwendet werden. Als Gesamtheit von Schleifkörnern wird auch die Gesamtheit aller in einem Schleifartikel vorhandenen Schleifkörner angesehen.

Bevorzugt enthält die Gesamtheit von Schleifkörnern mindestens 20 Gew.-%, bevorzugt mindestens 50 Gew.-%, besonders bevorzugt mindestens 90 Gew.-% erfindungsgemässe Schleifkörner, so wie sie oben beschrieben wurden. Die übrigen in der Gesamtheit enthalten Schleifkörner können ebenfalls eine definierte Form aufweisen, welche jedoch von der erfindungsgemässen Form abweicht, oder sie können keine definierte Form aufweisen, da es sich beispielsweise um gebrochene Schleifkörner handelt. Diese übrigen in der Gesamtheit enthalten Schleifkörner werden auch als "Stützkörner" bezeichnet.

Es ist denkbar und liegt im Rahmen der Erfindung, dass die in der Gesamtheit enthaltenen erfindungsgemässen Schleifkörner voneinander verschieden ausgebildet sind. So kann die Gesamtheit von Schleifkörnern beispielsweise einen ersten Anteil von Schleifkörnern einer ersten erfindungsgemässen Ausführungsform enthalten sowie einen zweiten Anteil von Schleifkörnern einer zweiten erfindungsgemässen Ausführungsform, die von der ersten erfindungsgemässen Ausführungsform verschieden ist. Insbesondere können sich die Schleifkörner der ersten erfindungsgemässen Ausführungsform in ihrer Grösse und/oder in ihrer Form von den Schleifkörnern der zweiten erfindungsgemässen Ausführungsform unterscheiden.

Die Gesamtheit von Schleifkörnern kann ausschliesslich aus identischen erfindungsgemässen Schleifkörnern bestehen; insbesondere hat die Gesamtheit dann eine punktförmige Grössenverteilung.

Die Gesamtheit von Schleifkörnern kann im Wesentlichen eine Grössenverteilung aufweisen, die einem in der Schleifmittelindustrie üblichen Grössenstandard entspricht, beispielsweise dem American National Standards Institute (ANSI), den Standards der Federation of European Producers of Abrasives (FEPA) oder dem Japanese Industrial Standard (JIS). Beispielsweise kann die Gesamtheit der Schleifkörner im Wesentlichen eine Körnung P12, P16, P20, P24, P30, P36, P40, P50, P60, P80, P100, P120, P150, P180, P220, P240, P280, P320, P360, P400, P500, P600, P800, P1000, P1200, P1500, P2000, P2500, P3000 oder P5000 gemäss dem FEPA-Standard aufweisen. Dabei bedeutet eine Grössenverteilung "im Wesentlichen", dass zumindest 90 Gew.-%, bevorzugt mindestens 95 Gew.-%, weiter bevorzugt mindestens 99 Gew.-% und besonders bevorzugt sämtliche Schleifkörner der Gesamtheit von Schleifkörnern diesen Standard erfüllen.

Wie oben bereits beschrieben wurde, ist es auch denkbar, dass die Gesamtheit mindestens zwei verschiedene Anteile erfindungsgemässer Schleifkörner und/oder mindestens einen Anteil nicht erfindungsgemässer Schleifkörner enthält. Jeder dieser Anteile kann für sich eine Grössenverteilung aufweisen, die jeweils einem der oben genannten, in der Schleifmittelindustrie üblichen Grössenstandards entspricht.

Viele erfindungsgemässe Ausführungsformen eines Schleifkorns oder einer Gesamtheit von Schleifkörnern, insbesondere Schleifkörner in Form eines Prismas, können beispielsweise mit dem folgenden, aus US 5,201,916 bekannten Verfahren hergestellt werden:

    a) Herstellung oder Bereitstellung einer Dispersion, enthaltend $\alpha$-Aluminiumoxid-Partikel und/oder Partikel, welche in $\alpha$-Aluminiumoxid umwandelbar sind, sowie mindestens ein flüchtiges Dispersionsmittel, bevorzugt Wasser;

    b) Einfüllen der Dispersion in mindestens eine Vertiefung einer Giessform;

    c) optional Abrakeln einer Oberseite der Giessform, um zumindest einen Teil der Dispersion zu entfernen, der über die Oberseite der Giessform übersteht;

    d) Entfernen eines Teiles der flüchtigen Komponenten der Dispersion, so dass mindestens ein Schleifkorn-Vorprodukt entsteht;

    e) Entfernen des Schleifkorn-Vorprodukts aus der Giessform;

    f) optional Kalzinieren des Schleifkorn-Vorprodukts;

    g) Sintern des Schleifkorn-Vorprodukts, um mindestens ein Schleifkorn zu erhalten.

Vor und/oder während der Herstellung der Dispersion im Schritt a) können die Rohstoffe, insbesondere α-Aluminiumoxid-Partikel und/oder Partikel, welche in α-Aluminiumoxid umwandelbar sind, gemahlen werden. Dies kann beispielsweise mit Hilfe einer Kugelmühle erfolgen, insbesondere mit Hilfe einer Planetenkugelmühle.

Die Dispersion kann mindestens einen Dispergator enthalten. Ein solcher Dispergator erleichtert die Bildung der Dispersion und erhöht ihre Stabilität, indem er beispielsweise Schichten um die einzelnen Körner herum bildet, die das Zusammenklumpen verhindern. Bei dem Dispergator kann es sich beispielsweise um ein Polymer handeln. In der Regel zersetzt sich der Dispergator spätestens während des Sinterns im Schritt g).

Zum Herstellen der erfindungsgemässen Schleifkörner kann ein Giesswerkzeug verwendet werden, wobei das Giesswerkzeug mindestens eine Giessform umfasst, die mindestens eine Vertiefung mit einer jeweiligen Oberfläche aufweist, wobei die Oberfläche komplementär zur Form zumindest eines Teils der Oberfläche des Schleifkorns ist.

Die Giessform kann beispielsweise Silikon enthalten oder daraus bestehen. Die Vertiefungen können eine offene Deckfläche aufweisen, durch die die Dispersion eingefüllt werden kann. Die Vertiefungen der Giessform weisen jeweils eine Oberfläche auf, deren Form komplementär zur Form zumindest eines Teils der Oberfläche des gewünschten Schleifkorns ist. Falls beispielsweise das Schleifkorn die Form eines Prismas mit einer Basisfläche hat, so kann die Oberfläche der Vertiefung eine Bodenfläche aufweisen, die gleich der Basisfläche des Prismas ist und parallel zur Oberseite der Giessform verläuft. Von der Bodenfläche kann sich eine Seitenwand erstrecken, die durch eine Schar paralleler Strecken gebildet ist und komplementär zur Mantelfläche des herzustellenden Schleifkörner ist.

Das im Schritt d) entstehende Vorprodukt sollte bevorzugt mechanisch stabil genug sein, um in den nachfolgenden Schritten als Schüttgut weiterverarbeitet werden zu können. Das optionale Kalzinieren in Schritt f) ist insbesondere dann vorteilhaft oder sogar erforderlich, wenn die Dispersion mehrere verschiedene Rohstoffe enthält und eine Phasenumwandlung erforderlich ist.

In einer Weiterentwicklung des aus US 5,201,916 bekannten Verfahrens ist die oben genannte Giessform vorteilhafterweise nur ein Teil eines mehrteiligen Giesswerkzeugs, welches zusätzlich mindestens ein Formelement, insbesondere eine weitere Giessform oder ein Stempelelement, umfasst, mit welchem ergänzend zu der in der ersten Giessform geformten Oberfläche zumindest ein Teil der restlichen Oberfläche des Schleifkorns formbar ist.

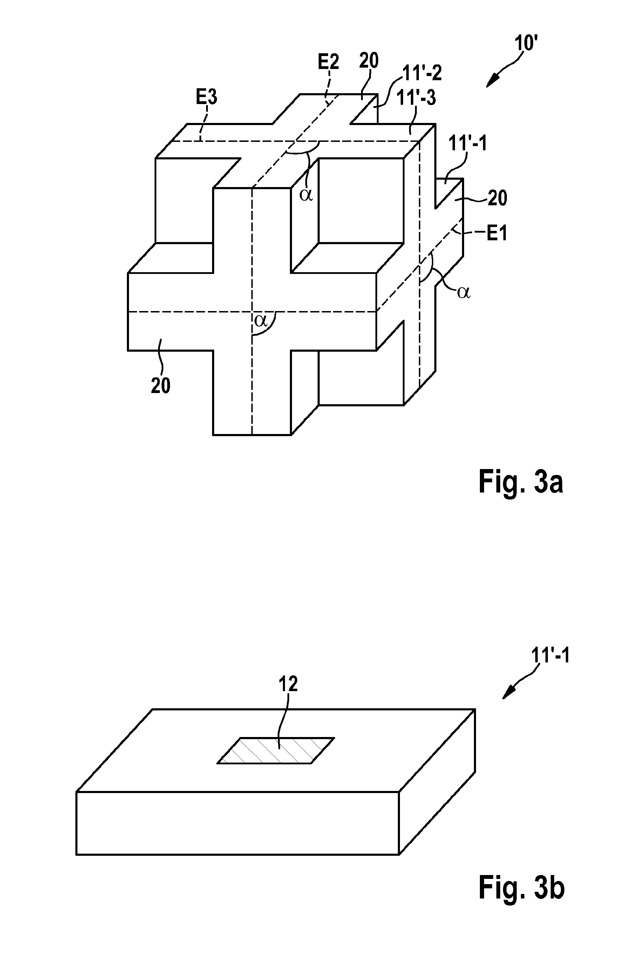

So können beispielsweise Stempelelemente vorgesehen sein, die zumindest teilweise in die gefüllten Vertiefungen der ersten Giessform geführt werden. Auf diese Weise kann etwa das Schleifkorn gemäss Figur 3a hergestellt werden, welches nicht die Form eines Prismas aufweist.

Alternativ ist es auch denkbar, dass im optionalen Schritt c) nicht die gesamte über die Oberseite der Giessform überstehende Dispersion abgerakelt wird, sondern stattdessen eine Schicht geeigneter Dicke über der Oberseite der Giessform stehen gelassen wird. Hierfür sollte die Dispersion im Schritt c) ausreichend formstabil sein. Beispielsweise kann im Schritt b) eine bereits ausreichend formstabile Dispersion eingefüllt werden oder die Dispersion zwischen den Schritten b) und c) in einen ausreichend formstabilen Zustand überführt werden. Die Stempelelemente müssen bei dieser Variante nicht zwingend in die Vertiefung eindringen; stattdessen kann mit Hilfe der Stempelelemente eine Formgebung in dem überstehenden Teil der Dispersion erfolgen. So kann beispielsweise bei dem in Figur 3a dargestellten Schleifkorn der oberhalb des Körpers 11'-1 angeordnete Teil aus dem über die Oberseite der Giessform überstehenden Teil der Dispersion geformt werden.

Bevorzugt schliessen die Stempelelemente die Vertiefungen der Giessform nicht vollständig ab, so dass die flüchtige Komponente der Dispersion entweichen kann.

Kompliziertere Formen von Schleifkornkörpern sind in zusammensetzbaren Giessformen, ähnlich wie im Spritzgussverfahren, formbar. Dazu weist mindestens eine Giessform mindestens eine Einfüllöffnung auf, durch welche die Dispersion in die Vertiefungen gelangen kann.

Noch ein Aspekt der Erfindung betrifft einen Schleifartikel, welcher eine wie oben beschriebene Gesamtheit von Schleifkörnern enthält. Insbesondere können also mindestens 20 Gew.-%, bevorzugt mindestens 50 Gew.-%, besonders bevorzugt mindestens 90 Gew.-% aller Schleifkörner des Schleifartikels als erfindungsgemässe Schleifkörner ausgebildet sein, so wie sie oben beschrieben wurden. Die übrigen Schleifkörner können ebenfalls eine definierte Form aufweisen, welche jedoch von der erfindungsgemässen Form abweicht, oder sie können keine definierte Form aufweisen.

Bei dem Schleifartikel kann es sich beispielsweise um einen beschichteten Schleifartikel (englisch: "coated abrasive"), einen Vliesschleifartikel, um einen gebundenen Schleifartikel (englisch: "bonded abrasive") oder um eine Schleifbürste handeln.

Ein beschichteter Schleifartikel enthält eine insbesondere flexible Unterlage, wie beispielsweise Papier, Vulkanfiber, eine Folie, ein textiles Material, einen Schaumstoff oder mehrschichtige Kombinationen davon. Die Schleifkörner können mit Hilfe eines Grundbinders (englisch: "make coat") an der Unterlage befestigt sein. Der Grundbinder und die Schleifkörner können mit einem Deckbinder (englisch: "size coat") überdeckt sein. Optional kann oberhalb des genannten Deckbinders auch noch ein zweiter Deckbinder vorhanden sein (englisch: "supersize coat").

Als Grundbinder, Deckbinder und zweiter Deckbinder können sämtliche an sich bekannte Bindemittel eingesetzt werden, beispielsweise aus Kunstharz, wie etwa einem Phenolharz, einem Epoxid, einem Harnstoffharz, einem Melaminharz oder einem ungesättigten Polyesterharz. Der Deckbinder und/oder der zweite Deckbinder können zudem weitere übliche Wirkstoffe und/oder Füllstoffe enthalten.

Der Schleifartikel kann in unterschiedlichen Konfektionsformen vorliegen, beispielsweise als Schleifscheibe oder als Schleifband.

Die Erfindung umfasst auch ein Verfahren zum Herstellen eines wie oben beschriebenen erfindungsgemässen Schleifartikels. Das Verfahren enthält einen Schritt, in dem eine Gesamtheit von Schleifkörnern an und/oder in einem Substrat fixiert wird, insbesondere mittels eines Bindemittels. Bei dem Substrat kann es sich etwa um eine insbesondere flexible Unterlage eines beschichteten Schleifartikels, um ein Vliesmaterial eines Vliesschleifmittels, um eine Matrix eines gebundenen Schleifmittels oder um Borsten einer Schleifbürste handeln. Im Falle eines beschichteten Schleifartikels kann das Auftragen des Grundbinders und/oder der Schleifkörner und/oder des Deckbinders und/oder des zweiten Deckbinders mit einer an sich bekannten Methode erfolgen. Beispielsweise können die Schleifkörner elektrostatisch oder mechanisch (d. h. gravimetrisch) aufgetragen werden. Aufgrund der erfindungsgemässen Form der Schleifkörner wird auch beim mechanischen Streuen ein grosser Anteil der Schleifkörner so orientiert, dass der oben beschriebene Vorteil vorliegt: Die Schleifkörner können so auf einer Unterlage platziert werden, dass die Randbereiche der Körper dort aufliegen; eine Schneidwirkung entsteht dadurch, dass von der Unterlage weg weisende Randbereiche der Körper und insbesondere dort vorliegende Ecken und/oder Kanten auf eine zu bearbeitende Oberfläche hin weisen. Auf eine aufwändigere elektrostatische Streuung kann also verzichtet werden.

Ferner richtet sich die Erfindung auch auf Verfahren zum Schleifen einer Oberfläche mit einem wie oben beschriebenen Schleifartikel. Bei der Oberfläche kann es sich insbesondere um eine lackierte Oberfläche handeln. Im Falle einer lackierten Oberfläche sind Schleifkörner mit Grössen von 500 $\mu$m oder weniger besonders geeignet.

Im Folgenden wird die Erfindung mit Hilfe mehrerer Ausführungsbeispiele und Zeichnungen näher erläutert. Dabei zeigen

Figur 1a: eine erste Ausführungsform eines erfindungsgemässen Schleifkorns in einer perspektivischen Ansicht;

Figur 1b: einen der beiden flächigen Körper des Schleifkorns aus Figur 1a;

Figur 2: ein Schleifkorn gemäss Figuren 1a und 1b auf einer Unterlage in einer Seitenansicht;

Figur 3a: eine zweite Ausführungsform eines erfindungsgemässen Schleifkorns in einer perspektivischen Ansicht;

Figur 3b: einen der drei flächigen Körper des Schleifkorns aus Figur 3a;

Figur 4: eine dritte Ausführungsform eines erfindungsgemässen Schleifkorns in einer perspektivischen Ansicht.

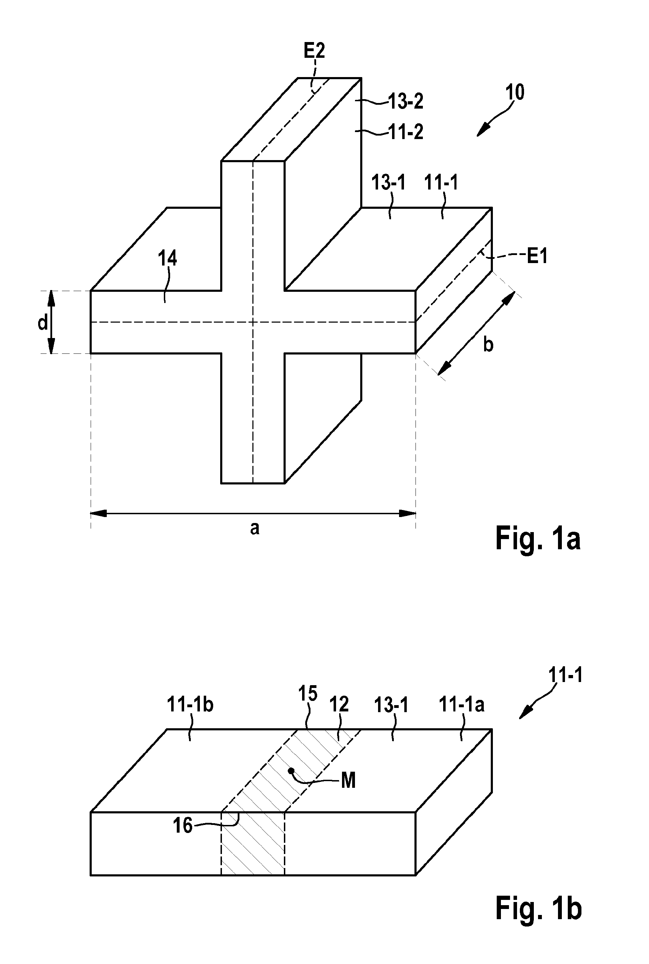

In Figur 1a ist ein erstes erfindungsgemässes Schleifkorn 10 dargestellt. Dieses enthält zwei flächige Körper 11-1, 11-2. Dabei handelt es sich um gedachte Körper, aus denen das Schleifkorn 10 nur gedanklich zusammengesetzt ist; tatsächlich ist das Schleifkorn 10 also einstückig ausgebildet. Die Körper 11-1, 11-2 haben jeweils beispielsweise die Form eines Quaders mit einer Dicke d = 200 $\mu$m, einer Länge a = 1000 $\mu$m und einer Breite b = 1000 $\mu$m. Es handelt sich also um ebene Körper mit quadratischen Hauptoberflächen 13-1, 13-2. Der Flächendurchmesser ist jeweils $\sqrt{2}$ 1000 $\mu$m.

Der erste Körper 11-1 erstreckt sich in einer Ebene E1, und der zweite Körper 11-2 erstreckt sich in einer Ebene E2. Die beiden Körper 11-1 und 11-2 durchdringen einander vollständig und schneiden einander unter einem Winkel $\alpha$ = 90°, da sich die beiden Ebenen E1 und E2 unter diesem Winkel schneiden. Das Schleifkorn 10 hat die Form eines Prismas mit einer Basisfläche 14 in Form eines Kreuzes. Seine Höhe ist gleich der oben genannten Breite b der einzelnen Körper 11-1, 11-2. Der Flächendurchmesser der Basisfläche 14 beträgt im hier dargestellten Beispiel $\sqrt{a^2 + d^2}$. Je grösser das Verhältnis aus der Höhe und dem Flächendurchmesser der Basisfläche 14 ist, desto geringer ist bei einer mechanischen Streuung die Gefahr, dass das Schleifkorn 10 mit einer der beiden Basisflächen 14 auf einer Unterlage zu liegen kommt.

Die Figur 1b zeigt den Körper 11-1 in einer perspektivischen Ansicht. Hier ist auch der Schnittbereich 12 durch eine Schraffur dargestellt; dort schneiden die beiden Körper 11-1 und 11-2 einander. Dieser Schnittbereich 12 erstreckt sich von einem ersten Randbereich 15 des Körpers 11-1 durch einen Mittelpunkt M hindurch zu einem zweiten, gegenüberliegenden Randbereich 16 des Körpers 11-1 und teilt ihn daher gedanklich in zwei gleich grosse Teilkörper 11-1a und 11-1b. Somit durchdringt der Körper 11-2 den Körper 11-1 im Sinne der Erfindung vollständig.

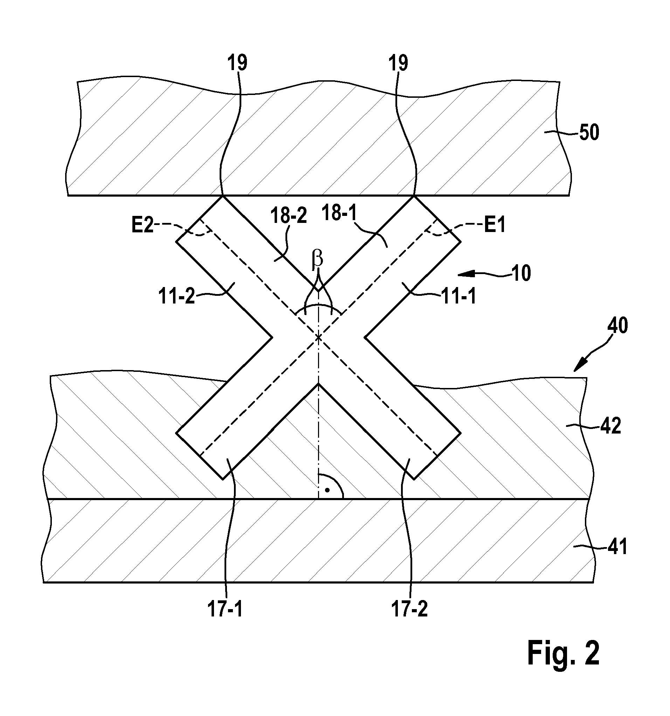

In der Seitenansicht gemäss Figur 2 ist schematisch ein Schleifmittel 40 dargestellt, welches ein in den Figuren 1a und 1b dargestelltes Schleifkorn 10 enthält, das mit Hilfe eines Bindemittels 42 an einer Unterlage 41 fixiert ist. Zur Vereinfachung der Darstellung ist hier nur ein einziges Schleifkorn 10 gezeigt, obwohl der Schleifartikel 40 natürlich tatsächlich eine Vielzahl solcher Schleifkörner 10 enthält. Jeweils ein Randbereich 17-1 des ersten Körpers 11-1 und ein Randbereich 17-2 des zweiten Körpers 11-2 liegen auf der Unterlage 41 auf. Die Ebenen E1 und E2 der Körper 11-1 und 11-2 sind daher unter einem Winkel β = 45° relativ zur Unterlage 41 angeordnet. Die jeweils gegenüberliegenden Randbereiche 18-1 und 18-2 enthalten Kanten 19, die auf eine zu bearbeitende Oberfläche 50 hin weisen.

Die Figur 3a zeigt eine zweite Ausführungsform eines erfindungsgemässen Schleifkorns 10' in einer perspektivischen Ansicht. Dieses Schleifkorn 10' enthält im Gegensatz zu der ersten Ausführungsform drei quaderförmige Körper 11'-1, 11'-2 und 11'-3, welche einander paarweise unter einem Winkel α = 90° schneiden. Auch dieses Schleifkorn 10' ist einstückig ausgebildet. Die Stirnflächen 20, die von den Seitenwänden der Körper 11'-1, 11'-2, 11'-3 gebildet werden, haben jeweils die Form eines Kreuzes. Die Geometrie dieses Schleifkorns 10' weist eine hohe Symmetrie auf, so dass es auch mittels einer mechanischer Streuung mit sehr einheitlicher Orientierung auf einer Schleifmittel-Unterlage platziert werden kann.

Figur 3b zeigt einzeln den Körper 11'-1 des Schleifkorns 10' aus Figur 3a. Der gemeinsame Schnittbereich 12 aller drei Körper 11'-1, 11'-2, 11'-3 befindet sich vollständig im Innenbereich der Hauptoberflächen des Körpers 11'-1.

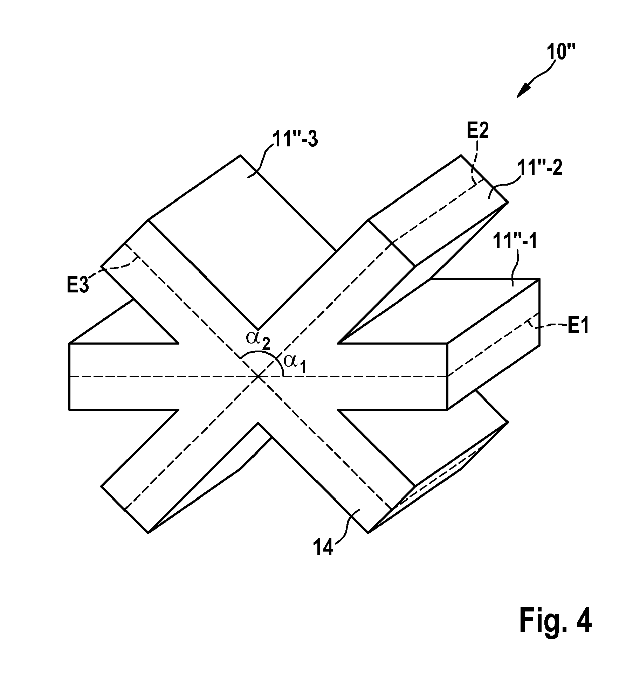

Die Figur 4 zeigt ein drittes Ausführungsbeispiel eines Schleifkorns 10". Dieses weist ebenfalls drei Körper 11"-1, 11"-2, 11"-3 auf. Die Flächennormalen der drei zugehörigen Ebenen E1, E2, E3 liegen jedoch im Gegensatz zum zweiten Ausführungsbeispiel gemäss Figuren 3a und 3b in einer gemeinsamen Ebene. Zwischen der Ebene E1 und der Ebene E2 liegt ein Winkel α1 = 45° vor und zwischen der Ebene E2 und der Ebene E3 ein Winkel α2 = 90°. Das Schleifkorn hat daher die Form eines Prismas mit einer sternförmigen Basisfläche 14.

Die erfindungsgemässen Schleifkörner können beispielsweise mit einem im Folgenden beschriebenen Verfahren hergestellt werden: Zunächst wird eine Dispersion aus 200 g α-Al$_2$O$_3$, 0,4 g MgO, 90 g Wasser als Dispersionsmittel und 0,5 g Dispergator hergestellt. Das MgO fungiert dabei als Keimbildner. Als Dispergator kann beispielsweise das Produkt Dolapix CE64, erhältlich von Zschimmer & Schwarz, 56108 Lahnstein, Deutschland eingesetzt werden. Die somit erhaltene Dispersion wird für 30 Minuten bei 200 Umdrehungen pro Minute in einer Planetenkugelmühle gemahlen, beispielsweise einer Planetenkugelmühle PM400, erhältlich von der Retsch GmbH, 42781 Haan, Deutschland. Anschliessend wird die gemahlene Dispersion in eine Giessform aus Silikon eingefüllt, die Vertiefungen in der Form der gewünschten Schleifkörner enthält. Für einige Ausführungsformen des Schleifkorns kann ein wie oben beschriebenes zusätzliches Formelement verwendet werden, beispielsweise eine weitere Giessform oder ein Stempelelement, mit welchem ergänzend zu der in der Giessform geformten Oberfläche zumindest ein Teil der restlichen Oberfläche des Schleifkorns formbar ist. Daraufhin wird die flüchtige Komponente, also das Wasser, aus der Dispersion entfernt. Hierdurch entsteht ein Schleifkorn-Vorprodukt, welches aus der Giessform entfernt wird. In einem abschliessenden Schritt wird das Vorprodukt als Schüttgut bei 1550 °C für 5 Minuten gesintert. Der Dispergator wird beim Sintern herausgebrannt.

Ein erfindungsgemässer Schleifartikel kann beispielsweise wie folgt hergestellt werden: Auf einer Unterlage aus Vulkanfiber mit einer Dicke von 0,8 mm wird eine Phenolharz-Dispersion als Grundbinder-Vorläufer in einer Menge von 120 g/m$^2$ aufgetragen. Anschliessend werden 600 g/m$^2$ der erfindungsgemässen Schleifkörner mittels elektrostatischer Streuung aufgetragen. Daraufhin wird der Grundbinder-Vorläufer zu einem Grundbinder gehärtet. Über dem Grundbinder und den Schleifkörnern wird eine Phenolharz-Dispersion in einer Menge von 800 g/m$^2$ als Deckbinder-Vorläufer aufgetragen, welche ebenfalls gehärtet wird.

**Patentansprüche**

1. Schleifkorn (10; 10'; 10"), enthaltend mindestens zwei, bevorzugt mindestens drei im Wesentlichen flächige Körper (11-1, 11-2; 11'-1, 11'-2, 11'-3; 11"-1, 11"-2, 11"-3),
   **dadurch gekennzeichnet, dass**
   mindestens zwei der flächigen Körper (11-1, 11-2; 11'-1, 11'-2, 11'-3; 11"-1, 11"-2, 11"-3) einander zumindest teilweise durchdringen.

2. Schleifkorn (10; 10'; 10") gemäss einem der vorangehenden Ansprüche, **dadurch gekennzeichnet, dass**
   ein erster flächiger Körper (11-1, 11-2; 11'-1, 11'-2, 11'-3; 11"-1, 11"-2, 11"-3) einen zweiten flächigen Körper (11-1, 11-2; 11'-1, 11'-2, 11'-3; 11"-1, 11"-2, 11"-3) vollständig durchdringt.

3. Schleifkorn (10; 10'; 10") gemäss einem der vorangehenden Ansprüche, **dadurch gekennzeichnet, dass**
   mindestens zwei einander durchdringende flächige Körper (11-1, 11-2; 11'-1, 11'-2,11'-3; 11"-1, 11"-2, 11"-3) einander in einem Winkel (α) schneiden, der insbesondere mindestens 30°, bevorzugt mindestens 60°, weiter bevorzugt mindestens 75° und besonders bevorzugt 90° beträgt.

4. Schleifkorn (10'; 10") gemäss Anspruch 2, **dadurch gekennzeichnet, dass**
   das Schleifkorn (10'; 10") mindestens drei flächige Körper (11'-1, 11'-2, 11'-3; 11"-1, 11"-2, 11"-3) aufweist, die einander paarweise durchdringen und einander paarweise unter einem Winkel (α) schneiden, der insbesondere mindestens 30°, bevorzugt mindestens 60°, weiter bevorzugt mindestens 75° und besonders bevorzugt 90° beträgt.

5. Schleifkorn (10'; 10") gemäss einem der vorangehenden Ansprüche, **dadurch gekennzeichnet**, das das Schleifkorn (10'; 10") mindestens drei, bevorzugt genau drei flächige Körper (11'-1, 11'-2, 11'-3; 11"-1, 11"-2, 11"-3) aufweist, welche einander in mindestens einem gemeinsamen Schnittbereich (12'; 12") schneiden.

6. Schleifkorn (10; 10'; 10") gemäss einem der vorangehenden Ansprüche, **dadurch gekennzeichnet, dass**
mindestens ein flächiger Körper (11-1, 11-2; 11'-1, 11'-2, 11'-3; 11"-1, 11"-2, 11"-3), insbesondere jeder flächige Körper (11-1, 11-2; 11'-1, 11'-2, 11'-3; 11"-1, 11"-2, 11"-3) im Wesentlichen eben ist.

7. Schleifkorn (10; 10'; 10") gemäss einem der vorangehenden Ansprüche, **dadurch gekennzeichnet, dass**
mindestens ein flächiger Körper, insbesondere jeder flächige Körper (11-1, 11-2; 11'-1, 11'-2, 11'-3; 11"-1, 11"-2, 11"-3) zwei gegenüberliegende Hauptoberflächen (13-1, 13-2) aufweist, welche im Wesentlichen parallelogrammförmig, insbesondere im Wesentlichen rechteckig, insbesondere im Wesentlichen quadratisch sind.

8. Schleifkorn (10; 10'; 10") gemäss einem der vorangehenden Ansprüche, **dadurch gekennzeichnet, dass**
das Verhältnis eines Flächendurchmessers (f) und einer Dicke (d) mindestens eines, bevorzugt jedes flächigen Körpers (11-1, 11-2; 11'-1, 11'-2, 11'-3; 11"-1, 11"-2, 11"-3) mindestens 2, bevorzugt mindestens 3, weiter bevorzugt mindestens 4 und besonders bevorzugt mindestens 5 beträgt.

9. Schleifkorn (10; 10'; 10") gemäss einem der vorangehenden Ansprüche, **dadurch gekennzeichnet, dass**
es ein keramisches Material, insbesondere ein polykristallines keramisches Material, enthält oder daraus besteht, bevorzugt Aluminiumoxid, besonders bevorzugt $\alpha$-$Al_2O_3$.

10. Gesamtheit von Schleifkörnern (10; 10'; 10"), **dadurch gekennzeichnet, dass**
sie mindestens 20 Gew.-%, bevorzugt mindestens 50 Gew.-%, besonders bevorzugt mindestens 90 Gew.-% Schleifkörner (10; 10'; 10") nach einem der vorangehenden Ansprüche enthält.

11. Verfahren zum Herstellen mindestens eines Schleifkorns (10; 10'; 10") oder einer Gesamtheit von Schleifkörnern (10; 10'; 10") gemäss einem der vorangehenden Ansprüche, **gekennzeichnet durch** die folgenden Schritte:

a) Herstellung oder Bereitstellung einer Dispersion, enthaltend $\alpha$-Aluminiumoxid-Partikel und/oder Partikel, welche in $\alpha$-Aluminiumoxid umwandelbar sind, sowie mindestens ein flüchtiges Dispersionsmittel, bevorzugt Wasser;
b) Einfüllen der Dispersion in mindestens eine Vertiefung einer Giessform;
c) optional Abrakeln einer Oberseite der Giessform, um zumindest einen Teil der Dispersion zu entfernen, der über die Oberseite der Giessform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform;
f) optional Kalzinieren des Schleifkorn-Vorprodukts;
g) Sintern des Schleifkorn-Vorprodukts, um mindestens ein Schleifkorn (10; 10'; 10") zu erhalten.

12. Giesswerkzeug zum Herstellen mindestens eines Schleifkorns (10; 10'; 10") nach einem der Ansprüche 1 bis 9, wobei das Giesswerkzeug mindestens eine Giessform umfasst, die mindestens eine Vertiefung, bevorzugt eine Vielzahl von Vertiefungen, mit einer jeweiligen Oberfläche aufweist, wobei die Oberfläche komplementär zur Form zumindest eines Teils der Oberfläche des Schleifkorns (10; 10'; 10") ist.

13. Schleifartikel (40), enthaltend eine Gesamtheit von Schleifkörnern (10; 10'; 10") gemäss Anspruch 11.

14. Verfahren zum Herstellen eines Schleifartikels (40) gemäss Anspruch 13, enthaltend einen Schritt, in dem eine Gesamtheit von Schleifkörnern (10; 10'; 10") gemäss Anspruch 10 an und/oder in einem Substrat (41) fixiert wird, insbesondere mittels eines Bindemittels (42).

15. Verfahren zum Schleifen einer Oberfläche (50), insbesondere einer lackierten Oberfläche, mit einem Schleifartikel (40) gemäss Anspruch 13.

Fig. 1a

Fig. 1b

EP 2 692 816 A1

Fig. 2

12

**Fig. 3a**

**Fig. 3b**

Fig. 4

Europäisches
Patentamt

European
Patent Office

Office européen
des brevets

## EUROPÄISCHER RECHERCHENBERICHT

**Nummer der Anmeldung**

EP 12 17 8933

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/026583 A1 (HARDY L C [US] ET AL HARDY L CHARLES [US] ET AL) 31. Januar 2008 (2008-01-31) * Absatz [0193]; Abbildung 7 * * das ganze Dokument * ----- | 1-15 | INV. C09K3/14 B24D3/14 C04B35/111 |
| X | US 2012/168979 A1 (BAUER RALPH [CA] ET AL) 5. Juli 2012 (2012-07-05) * Absätze [0053], [0054]; Abbildung 2 * * das ganze Dokument * ----- | 1-15 | |
| X | EP 1 489 652 A2 (MINNESOTA MINING & MFG [US]) 22. Dezember 2004 (2004-12-22) * Absätze [0205], [0206] * * das ganze Dokument * ----- | 1-15 | |
| X,D | US 5 201 916 A (BERG TODD A [US] ET AL) 13. April 1993 (1993-04-13) * Anspruch 1; Beispiel 11 * * das ganze Dokument * ----- | 11 | |

RECHERCHIERTE SACHGEBIETE (IPC)

C09K
B24D
C04B

Der vorliegende Recherchenbericht wurde für alle Patentansprüche erstellt

| Recherchenort | Abschlußdatum der Recherche | Prüfer |
|---|---|---|
| Den Haag | 7. Januar 2013 | Straub, Thomas |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 12 17 8933

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-01-2013

| Im Recherchenbericht angeführtes Patentdokument | Datum der Veröffentlichung | Mitglied(er) der Patentfamilie | Datum der Veröffentlichung |
|---|---|---|---|
| US 2008026583 A1 | 31-01-2008 | CN 101779274 A | 14-07-2010 |
| | | EP 2186121 A2 | 19-05-2010 |
| | | JP 2010537404 A | 02-12-2010 |
| | | KR 20100065328 A | 16-06-2010 |
| | | TW 200918654 A | 01-05-2009 |
| | | US 2008026583 A1 | 31-01-2008 |
| | | US 2012094487 A1 | 19-04-2012 |
| | | WO 2009023387 A2 | 19-02-2009 |
| US 2012168979 A1 | 05-07-2012 | US 2012168979 A1 | 05-07-2012 |
| | | WO 2012092605 A2 | 05-07-2012 |
| EP 1489652 A2 | 22-12-2004 | KEINE | |
| US 5201916 A | 13-04-1993 | CN 1081948 A | 16-02-1994 |
| | | TR 27357 A | 17-01-1995 |
| | | US 5201916 A | 13-04-1993 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5201916 A
- EP 615816 A
- WO 2009085841 A
- WO 2010077495 A
- WO 2010077518 A
- WO 2010077491 A
- WO 2010077519 A
- WO 2011068724 A
- WO 2011109188 A
- WO 2010077509 A
- WO 2011068714 A
- WO 2011139562 A
- WO 2012018903 A
- WO 2012061016 A
- WO 9612776 A
- WO 2011087649 A
- WO 2012061033 A
- EP 615816 A1